# EUROPÄISCHE PATENTANMELDUNG

(11) **EP 1 284 534 A1**
(43) Veröffentlichungstag der Anmeldung: **19.02.2003**
(21) Anmeldenummer: 02012655.3
(22) Anmeldetag: 07.06.2002
(51) Int. Cl.: H02G 3/04

(54) **Verdrahtungskanal**

(30) Priorität: 18.08.2001 DE 20113693 U
(71) Anmelder: Tehalit GmbH & Co. KG, D-67716 Heltersberg (DE)
(72) Erfinder: Graf, Benno, 66989 Höheinöd (DE); Eberle, Patrick, 66292 Riegelsberg (DE)
(74) Vertreter: Patentanwälte Möll und Bitterich

(57) **Zusammenfassung**

Gegenstand der Erfindung sind Verdrahtungskanäle, im wesentlichen umfassend einen Boden und zwei Seitenwände, gebildet durch gegenseitig beabstandete Zungen (13). Der Boden besteht aus zwei Teilen (11, 12), die im Winkel, vorzugsweise im rechten Winkel zueinander stehen.

## Beschreibung

Die Erfindung betrifft Verdrahtungskanäle gemäß dem Oberbegriff des Anspruchs 1.

Verdrahtungskanäle sind seit vielen Jahrzehnten in den unterschiedlichsten Varianten bekannt und in Gebrauch. Man vergleiche beispielsweise US 2 896 009, angemeldet 1955, US 2 921 607, FR 1 213 786, FR 1 177 110, FR 1 224 204, DE 1 829 069 U, DE-AS 1 440 231, DE-AS 1 440 237, DE 1 848 965 U, DE2 002 912 A, DE 2 714 885 C, DE 3 014 695 A, EP 0 315 531 B, FR 2 691 227 A, EP 0 570 272 B oder DE 198 28 082 A. Alle diese Verdrahtungskanäle besitzen einen Boden, zwei Seitenwände, die durch senkrecht zum Boden verlaufende Schlitze zu Zungen umgeformt sind, Deckelhalteprofile an den freien Längskanten der Seitenwände und gegebenenfalls einen Deckel, der auf die Deckelhalteprofile der Seitenwände lösbar aufgesetzt werden kann.

Verdrahtungskanäle werden überwiegend in Schaltschränken eingesetzt, wo sie die ordentliche Verlegung von Drähten und Leitungen ermöglichen. Die Schlitze in den Seitenwänden ermöglichen das Ein- und Ausführen von Drähten und Leitungen an beliebigen Stellen.

Soll ein Verdrahtungskanal aus Platzgründen ganz in einer Ecke eines Schaltschranks montiert werden, so steht wegen des U- bzw. C-förmigen Querschnitts der Verdrahtungskanäle nur noch eine Kanalseitenwand zum Ein- und Ausführen der Kabel und Leitungen zur Verfügung. Die andere Seitenwand ist durch eine der Schaltschrankwände blockiert. In der Praxis müssen deshalb die Verdrahtungskanäle mit einem Mindestabstand zu den Schaltschrankwänden montiert werden. Die damit verbundene Platzverschwendung ist unbefriedigend.

Der vorliegenden Erfindung liegt daher die Aufgabe zugrunde, einen Verdrahtungskanal der eingangs genannten Art anzugeben, der speziell für die Montage in den Ecken von Schaltschränken geeignet ist.

Diese Aufgabe wird gelöst durch einen Verdrahtungskanal mit den Merkmalen des Anspruchs 1.

Dank der vorliegenden Erfindung erhält man einen Verdrahtungskanal mit einer großen Kapazität für Kabel und Leitungen, der genau in die Ecken von Schaltschränken und dergleichen passt, wobei die geschlitzten Seitenwände zum Ein- und Ausführen von Kabeln und Leitungen stets frei bleiben. Dadurch können unmittelbar von beiden Seitenwänden weitere Verdrahtungskanäle abzweigen.

Vorteilhafterweise stehen die Bodenteile im rechten Winkel zueinander, entsprechend der üblichen Anordnung in Schaltschränken.

Vorzugsweise ist der Boden einstückig.

Um das Abbrechen der Zungen zu erleichtern, können Solltrennnuten eingeformt werden.

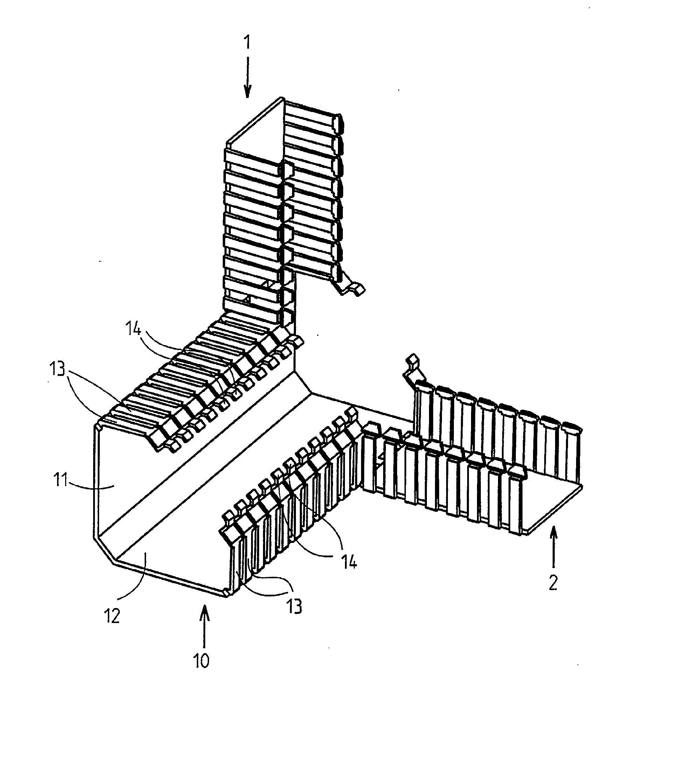

Anhand der Zeichnung soll die Erfindung in Form eines Ausführungsbeispiels näher erläutert werden.

Die Figur zeigt in isometrischer Darstellung einen Verdrahtungseckkanal 10, dessen Boden aus zwei im rechten Winkel zueinander stehenden Teilen 11, 12 besteht, an die sich wie an sich bekannt Seitenwände aus regelmäßig beabstandeten Zungen 13 anschließen, deren freie Enden zu Deckelhalteprofilen 14 für einen Deckel (nicht dargestellt) geformt sind. An den Verdrahtungseckkanal 10 stoßen zwei herkömmliche Verdrahtungskanäle 1, 2 mit U-förmigem Querschnitt. Um den problemlosen Durchgang von Kabeln und Leitungen (nicht dargestellt) zu ermöglichen, sind im Bereich der Verdrahtungskanäle 1, 2 die Zungen 13 des Verdrahtungseckkanals 10 herausgebrochen, was gegebenenfalls durch das Anbringen von Solltrennstellen am Fuß der Zungen 13 unterstützt werden kann.

## Patentansprüche

1. Verdrahtungskanal, im wesentlichen umfassend
- einen Boden (11, 12),
- zwei Seitenwände, gebildet durch gegenseitig beabstandete Zungen (13)
- und gegebenenfalls Deckelhalteprofile (14) an den freien Enden der Zungen (13), **gekennzeichnet durch** das Merkmal:
- der Boden besteht aus zwei Teilen (11, 12), die im Winkel zueinander stehen.

2. Verdrahtungskanal nach Anspruch 1, **gekennzeichnet durch** das Merkmal:
- die beiden Bodenteile (11, 12) stehen im rechten Winkel zueinander.

3. Verdrahtungskanal nach Anspruch 1 oder 2, **gekennzeichnet durch** das Merkmal:
- der Boden (11, 12) ist einstückig.

4. Verdrahtungskanal nach Anspruch 1, 2 oder 3, **gekennzeichnet durch** das Merkmal:
- in die Zungen (13) sind Solltrennnuten eingeformt.
